# EUROPÄISCHE PATENTANMELDUNG

(11) **EP 4 321 740 A2**
(43) Veröffentlichungstag der Anmeldung: **14.02.2024**
(21) Anmeldenummer: 23212700.1
(22) Anmeldetag: 25.07.2013
(51) Int. Cl.: F01N 3/20

(54) **EINRICHTUNG ZUR SAUGFILTRATION VON FLUIDEN**

(30) Priorität: 31.08.2012 DE 102012017288
(62) Teilanmeldung aus: 13744966.6
(71) Anmelder: Hydac Filtertechnik GmbH, 66280 Sulzbach/Saar (DE)
(72) Erfinder: Lauer, Viktor Josef, 66809 Nalbach (DE); Sann, Norbert, 66292 Riegelsberg (DE); Sakraschinsky, Michael, 66386 St. Ingbert (DE); Hennes, Stefan, 66540 Neunkirchen (DE); Wohlers, Alexander, 54439 Saarburg (DE); Seibold, Paul, 82491 Grainau (DE)
(74) Vertreter: Bartels und Partner, Patentanwälte

(57) **Zusammenfassung**

1. Einrichtung zur Saugfiltration von Fluiden.
2. Eine Einrichtung zur Saugfiltration von Fluiden, wie Harnstofflösungen für Abgas-Nachbehandlungssysteme, mit einem das Fluid bevorratenden Tank (2) und einem in diesem angeordneten Filterelement (34), das ein Filtermedium (32) aufweist, das die Tankfüllung von einem reinseitigen inneren Filterhohlraum (20) trennt und sich vom Bodenbereich (10) des Tanks (2) bis zu einer Füllstandshöhe (28) erstreckt, die einem Teil des Füllvolumens des Tanks (2) entspricht, wobei am Filterhohlraum (20) ein Sauganschluss (22) vorgesehen ist, über den durch einen einem betrieblichen Systemdruck entsprechenden Saugdruck das abgereinigte Fluid abführbar ist, ist dadurch gekennzeichnet, dass das Filterelement (34) ein Filtermedium (32) aufweist, das bei innerhalb des Bereichs eines niedrigen betrieblichen Systemdruckes liegenden Saugdrücken luftundurchlässig ist.

## Beschreibung

Die Erfindung betrifft eine Einrichtung zur Saugfiltration von Fluiden, wie Harnstofflösungen für Abgas-Nachbehandlungssysteme, mit einem das Fluid bevorratenden Tank und einem in diesem angeordneten Filterelement, das ein Filtermedium aufweist, das die Tankfüllung von einem reinseitigen, inneren Filterhohlraum trennt und sich vom Bodenbereich des Tanks bis zu einer Füllstandshöhe erstreckt, die einem Teil des Füllvolumens des Tanks entspricht, wobei am Filterhohlraum ein Sauganschluss vorgesehen ist, über den durch einen einem betrieblichen Systemdruck entsprechenden Saugdruck das abgereinigte Fluid abführbar ist. Ferner bezieht sich die Erfindung auf ein zur Benutzung bei einer derartigen Einrichtung vorgesehenes Filterelement.

Einrichtungen zur Saugfiltration von Fluiden, wie flüssigen Betriebsmitteln, Kraftstoffen oder dergleichen, kommen auf den verschiedensten Gebieten zum Einsatz. Aufgrund der gestiegenen Anforderungen an das Emissionsverhalten von Verbrennungsmotoren werden in neuerer Zeit vermehrt Abgas-Nachbehandlungssysteme benutzt, bei denen für eine selektive katalytische Reduktion von Stickoxyden eine wässrige Harnstofflösung, die in einem Tank bevorratet ist, in einen Abgasstrom injiziert wird, um in Verbindung mit einem SCR-Katalysator Ammoniak als eigentliches Reduktionsmittel zu gewinnen. Als zusätzlicher Betriebsstoff für Kraftfahrzeuge ist die Harnstofflösung unter der Handelsbezeichnung "Adblue" an Tankstellen für die Betankung des betreffenden Vorratstanks erhältlich. Für die Betriebssicherheit des zugehörigen Injektorsystems sind an die Reinheit der Harnstofflösung hohe Anforderungen zu stellen. Verunreinigungen könnten im Injektorsystem zu Verstopfungen von Kanälen und/oder Dosierpumpen und/oder Ventilen führen. Da die für die Betankung bereitgestellte Harnstofflösung unterschiedliche Verunreinigungen enthalten kann und insbesondere auch die Gefahr besteht, dass beim Betankungsvorgang eine Menge an Schmutz in den Tank eingebracht werden kann, ist es erforderlich, die Harnstofflösung, die dem Tank entnommen wird, zu filtern.

Für diesen Zweck ist aus dem Dokument WO 2011/124637 A1 eine Einrichtung der eingangs genannten Gattung bekannt, bei der das als Saugfilter dienende Filterelement in den die Harnstofflösung bevorratenden Tank integriert ist. Das Betriebsverhalten dieser Einrichtung ist für den in Frage kommenden Einsatz bei Kraftfahrzeugen nicht optimal. So ist der sichere Betrieb des Systems davon abhängig, dass die Füllstandshöhe im Tank nicht unter die Oberkante des Filtermediums des Filterelements absinkt. Sobald dies der Fall ist, besteht die Gefahr, dass über den nicht benutzten, d.h. freiliegenden Teil des Filtermediums Luft aus dem Tank angesaugt wird und in das System gelangt. Für einen sinnvollen Betrieb von Kraftfahrzeugen ist jedoch zu fordern, dass die Füllstandshöhe bis zum Bodenbereich des Tanks abgesenkt werden kann, um so eine große Füllmenge aus dem Tank entnehmen zu können.

Im Hinblick auf diese Problematik stellt sich die Erfindung die Aufgabe, eine Einrichtung zur Saugfiltration zur Verfügung zu stellen, die sich bei einem in den betreffenden Tank integrierten Filterelement durch ein besonders günstiges Betriebsverhalten auszeichnet.

Erfindungsgemäß ist diese Aufgabe durch eine Einrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass das Filterelement ein Filtermedium aufweist, das bei innerhalb des Bereichs eines niedrigen betrieblichen Systemdrucks liegenden Saugdrücken luftundurchlässig ist. Dadurch ist die Gefahr vermieden, dass aus dem Tank Luft über das Filtermedium in den reinseitigen, inneren Filterhohlraum eingesaugt wird, sobald der Füllstand im Tank unter die Höhe der Oberkante des Filtermediums abgesunken ist, so dass ein Teil des Filtermediums oberhalb des Flüssigkeitspegels freiliegt. Ohne Lufteintrag kann daher praktisch das gesamte, das Filterelement umgebende Tankvolumen genutzt werden.

Bei besonders vorteilhaften Ausführungsbeispielen der Erfindung ist der Sauganschluss am Filterhohlraum an dessen vom Tankboden entfernten, oberen Ende angeordnet. Durch diese Anordnung ist nicht nur das Problem behoben, dass beim laufenden Betrieb bei über die Oberkante des Filterelements abgesunkenen Füllstands Luft eingesaugt werden könnte, sondern es ist darüber hinaus auch ein besonders sicheres Anfahren des Systems nach Stillstandszeiten gewährleistet ist. Aufgrund der fehlenden Luftdurchlässigkeit des Filtermediums kann anfänglich innerhalb des Filterhohlraums des Filterelements befindliche Luft beim Befüllen des Tanks nicht entweichen. Über den kopfseitigen Sauganschluss wird bei Inbetriebnahme der Pumpe diese im Filterelement enthaltene Menge an Luft abgeführt. Da bei diesem Vorgang keine Harnstofflösung mitgefördert wird, kann die Luftmenge durch normalen Entlüftungsvorgang, beispielsweise selbsttätige Pumpenentlüftung, ausgeschieden werden, wonach das System luftfrei betriebsbereit ist. Dieser Entlüftungsvorgang kann im Anschluss an Betankungsvorgänge automatisiert erfolgen.

Ein für die in Frage kommenden Druckgradienten luftundurchlässiges Filtermedium kann durch ein Melt-blown-Fasermaterial gebildet sein, wobei Kunststofffasern, insbesondere aus PA 66, vorgesehen sein können.

Bei besonders vorteilhaften Ausführungsbeispielen ist ein Filtermedium mit einer Wandstärke im Bereich von 5 mm und einer im Bereich von 10 *µ*m liegenden Feinheit vorgesehen. Bei derart aufgebauten Filtermedien saugt sich dieses infolge der Kapillarwirkung vollständig mit der betreffenden Flüssigkeit voll, selbst wenn Teile des Filtermediums oberhalb des Füllspiegels liegen, sodass das Filtermedium über seine gesamte Höhe für niedrige Saugdrücke luftdicht ist.

Gegenstand der Erfindung ist gemäß dem Patentanspruch 6 auch ein Filterelement, das zur Benutzung bei einer Einrichtung zur Saugfiltration bei einem der Patentansprüche 1 bis 5 vorgesehen ist.

Nachstehend ist die Erfindung anhand eines in der Zeichnung dargestellten Ausführungsbeispiels im Einzelnen erläutert. Es zeigen:
- Fig. 1: in der Art einer stark vereinfachten Funktionsskizze eine Einrichtung gemäß dem Stand der Technik zur Saugfiltration einer Harnstofflösung, wobei die Füllstandshöhe im zugehörigen Tank oberhalb der Oberkante des betreffenden Filterelements liegt;
- Fig. 2: eine der Fig. 1 entsprechende Darstellung der Einrichtung des Standes der Technik, wobei die Füllstandshöhe unterhalb der Oberkante des Filterelements gelegen ist;
- Fig. 3: eine den Fig. 1 und 2 ähnliche, skizzenhafte Darstellung eines Ausführungsbeispiels der erfindungsgemäßen Einrichtung zur Saugfiltration, wobei ein Betriebszustand vor Inbetriebnahme dargestellt ist;
- Fig. 4: eine entsprechende skizzenhafte Darstellung des Ausführungsbeispiels der Erfindung, wobei ein Zustand nach Inbetriebnahme dargestellt ist, und
- Fig. 5 und 6: entsprechende skizzenhafte Darstellungen, die Zustände des Ausführungsbeispiels der Erfindung mit unterschiedlich weit abgesenkten Füllstandshöhen im Tank zeigen.

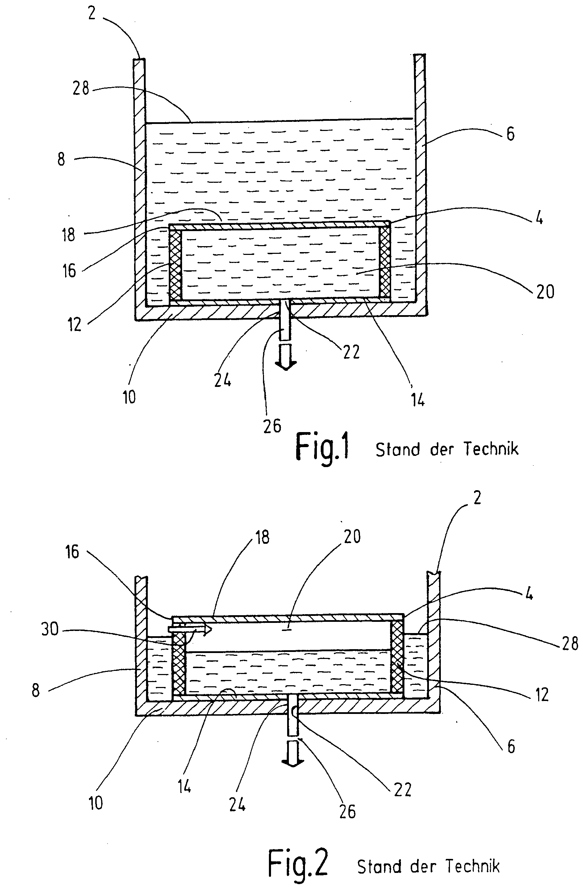

Die Erfindung ist nachstehend anhand eines Beispiels erläutert, das zur Saugfiltration einer wässrigen Harnstofflösung vorgesehen ist, wie sie unter der Bezeichnung "Adblue" bekannt und für einen Einsatz bei Abgas-Nachbehandlungssystemen von Verbrennungsmotoren einsetzbar ist. Die Erfindung geht von dem im Dokument WO 2011/124637 A1 dokumentierten, einschlägigen Stand der Technik aus, wie er vorliegend in den Fig. 1 und 2 prinzipiell in der Art vereinfachter Funktionsskizzen dargestellt ist. In den Figuren ist ein einen Vorrat der Harnstofflösung aufnehmender Tank vereinfacht dargestellt und mit 2 bezeichnet. Innerhalb des kreiszylinderförmigen Innenraums des Tanks 2 ist ein als Saugfilter dienendes Filterelement 4 derart angeordnet, dass es einen zu den Seitenwänden 6 und 8 des Tanks 2 konzentrischen Innenzylinder bildet, der auf dem Boden 10 des Tanks 2 angeordnet ist. Das Filtermedium 12 des Filterelements 4 erstreckt sich von einer auf dem Tankboden 10 aufliegenden Fußplatte 14 zu einer an der Oberkante 16 des Filterelements 4 befindlichen Deckplatte 18 und begrenzt mit Fußplatte 14 und Deckplatte 18 einen die Reinseite beim Filtrationsvorgang bildenden inneren Filterhohlraum 20. An der Fußplatte 14 befindet sich ein Sauganschluss 22, aus dem, über eine Öffnung 24 im Tankboden 10, abgereinigte Harnstofflösung abführbar ist, wie mit Strömungspfeilen 26 angedeutet ist.

Die Fig. 2 verdeutlicht gegenüber Fig. 1 einen Betriebszustand der Einrichtung des Standes der Technik, bei dem die Füllstandshöhe 28 im Tank 2 unter die Oberkante 16 des Filterelements 4 abgesunken ist. Sobald dies während des Betriebs der Einrichtung eintritt und dadurch ein Teil des Filtermediums 12 im Luftraum des Tanks 2 freiliegend ist, kann ein Lufteintritt, wie mit Strömungspfeil 30 angedeutet ist, in den Filterhohlraum 20 hinein stattfinden, falls sich in diesem gegenüber dem Luftraum des Tanks 2 ein Unterdruck befindet. Solange dies nicht der Fall ist, kann entsprechend des geodätischen Druckes Harnstofflösung über den benetzten Teil des Filtermediums 12 in den Filterhohlraum 20 einströmen und über den Sauganschluss 22 abtreten. Für den Fall, dass jedoch beim Betrieb der über das Filtermedium 12 nachströmende Volumenstrom geringer ausfällt als das gegebenenfalls angeforderte Ansaugvolumen der zugehörigen Pumpe, baut sich im Filterhohlraum 20 ein Unterdruck aus, so dass Luft aus dem Luftraum des Tanks 2 in den Filterhohlraum 20 eingesaugt wird, dieser von der abgereinigten Harnstofflösung leergesaugt wird und die angesaugte Luft im System gefördert wird. Infolgedessen ist der sichere Betrieb nur gewährleistet, wenn die Füllstandshöhe 28 oberhalb der Elementoberkante 16 verbleibt, was bedeutet, dass nicht die gesamte Füllmenge des Tanks 2 ausnutzbar ist.

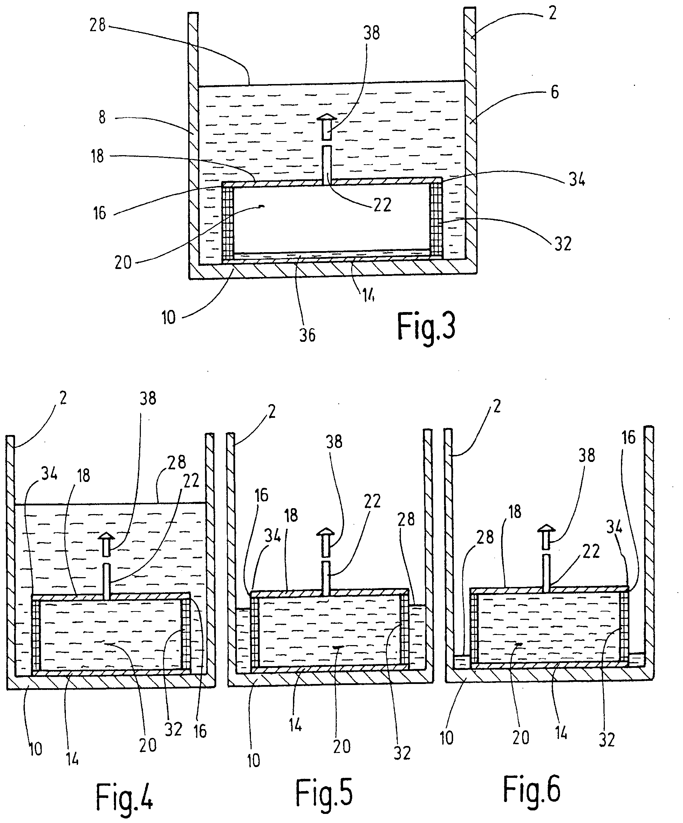

Die Fig. 3 bis 6 verdeutlichen die gegenüber dem in Fig. 1 und 2 dargestellten Stand der Technik unterschiedliche Funktionsweise der erfindungsgemäßen Einrichtung. Bei der Erfindung weist das Filterelement 34, das wie bei dem in Fig. 1 und 2 gezeigten Stand der Technik auf dem Boden 10 des Tanks 2 angeordnet und zur Saugfiltration vorgesehen ist, ein Filtermedium 32 auf, das für niedrige Saugdrücke luftundurchlässig ist. Im weiteren Unterschied zum Stand der Technik befindet sich bei dem in Fig. 3 bis 6 gezeigten Ausführungsbeispiel der Sauganschluss 22 nicht an der unteren Fußplatte 14 des Filterelements 34, sondern an der oberen Deckplatte 18. Die Fig. 3 verdeutlicht einen Zustand der Einrichtung vor der Inbetriebnahme des Systems und bei Befüllung des Tanks 2 auf eine oberhalb des Filterelements 34 gelegene Füllstandshöhe 28. Aufgrund der Luftundurchlässigkeit des Filtermediums 34 bleibt vor einer Inbetriebsetzung der nachgeordneten Pumpeinrichtung eine im Filterhohlraum 20 anfänglich befindliche Luftmenge im Filterhohlraum 20 eingeschlossen, so dass sich beim Betankungsvorgang durch geodätischen Druck der das Filterelement 34 umgebenen Harnstofflösung im Filterhohlraum 20 ein Überdruck entwickelt, so dass lediglich eine geringe Bodenschicht 36 einströmender Harnstofflösung gebildet wird, über der sich eine Luftmenge befindet, siehe Fig. 3. Wird, ausgehend von dem in Fig. 3 gezeigten Zustand, das System in Betrieb gesetzt, dann wird durch die zugehörige Pumpe diese Luftmenge aus dem Filterhohlraum 20 abgeführt, siehe Pfeil 38.

Bei der kopfseitigen Anordnung des Sauganschlusses 22 wird für einen mittels der Pumpeinrichtung durchzuführenden Entlüftungsvorgang, beispielsweise mittels einer selbstentlüftenden Pumpe, der gesamte Luftinhalt aus dem Filterhohlraum 20 abgeführt, bis in diesem das zunächst lediglich die Bodenschicht 36 bildende, abgereinigte Fluid bis zum Sauganschluss 22 angestiegen ist. Das Filterelement 34 ist nun luftfrei und die Einrichtung betriebsbereit. Dieser Zustand ist in Fig. 4 dargestellt.

Die Fig. 5 und 6 zeigen weitere Betriebsphasen mit unterschiedlich weit abgesenkter Füllstandshöhe 28. Dank des luftundurchlässigen Filtermediums 34 bleibt der Filterhohlraum 20 vollständig mit der abgereinigten Harnstofflösung gefüllt, d.h. luftfrei. Daher kann die gesamte Füllmenge des Tanks 2 ohne die Gefahr des Lufteintrags in das System genutzt werden, siehe Fig. 6, wo der Zustand des praktisch vollständig entleerten Tanks 2 dargestellt ist.

Während vorstehend die Erfindung anhand eines für die Saugfiltration einer wässrigen Harnstofflösung (Adblue) vorgesehenen Einrichtung erläutert ist, versteht sich, dass die Erfindung gleichermaßen für andere Fluide vorteilhaft anwendbar ist, bei denen eine Saugfiltration ohne die Gefahr des Lufteintrags erforderlich ist. Wie bereits erwähnt, kann der Entlüftungsvorgang im Anschluss an eine Betankung automatisiert durchgeführt werden. Als für die Erfindung besonders geeignetes Filtermedium 32 kann ein Melt-blown-Fasermaterial vorteilhaft eingesetzt werden. Bei einer Wandstärke von etwa 5 mm und einer Filterfeinheit im Bereich von 10 *µ*m zeichnet sich ein derartiges Filtermedium 32 durch eine hohe Kapillarwirkung aus, so dass es sich auch bei nur teilweiser Benetzung mit einem Fluid, wie wässrige Harnstofflösung, über seine gesamte Länge vollsaugt und dadurch für in Frage kommende, niedrige Saugdrücke luftundurchlässig ist. Während die Saugfiltration mittels einer betreffenden, mit dem Sauganschluss 22 verbundenen Saugpumpe (nicht dargestellt) erfolgt, versteht sich, dass nachgeordnete Pumpeinrichtungen
+ als Druckerhöher vorgesehen sein können, um gewünschte Betriebsdrücke zu erzeugen, beispielsweise Einspritzdrücke für Adblue-Anwendungen.

## Patentansprüche

1. Einrichtung zur Saugfiltration von Fluiden, wie Harnstofflösungen für Abgas-Nachbehandlungssysteme, mit einem das Fluid bevorratenden Tank (2) und einem in diesem angeordneten Filterelement (4), das ein Filtermedium (12) aufweist, das die Tankfüllung von einem reinseitigen inneren Filterhohlraum (20) trennt und sich vom Bodenbereich (10) des Tanks (2) bis zu einer Füllstandshöhe (28) erstreckt, die einem Teil des Füllvolumens des Tanks (2) entspricht, wobei am Filterhohlraum (20) ein Sauganschluss (22) vorgesehen ist, über den durch einen einem betrieblichen Systemdruck entsprechenden Saugdruck das abgereinigte Fluid abführbar ist, **dadurch gekennzeichnet, dass** das Filterelement (34) ein Filtermedium (32) aufweist, das bei innerhalb des Bereichs eines niedrigen betrieblichen Systemdruckes liegenden Saugdrücken luftundurchlässig ist.

2. Einrichtung nach Anspruch 1, **dadurch gekennzeichnet, dass** der Sauganschluss (22) am Filterhohlraum (20) an dessen vom Tankboden (10) entfernten oberen Ende angeordnet ist.

3. Einrichtung nach Anspruch 1 oder 2, **dadurch gekennzeichnet, dass** das Filtermedium (32) ein Melt-blown-Fasermaterial aufweist.

4. Einrichtung nach einem der vorstehenden Ansprüche, **dadurch gekennzeichnet, dass** das Filtermedium (32) Kunststofffasern, insbesondere aus PA 66, aufweist.

5. Einrichtung nach einem der vorstehenden Ansprüche, **dadurch gekennzeichnet, dass** das Filtermedium (32) eine Wandstärke im Bereich von 2 mm bis 10 mm, vorzugsweise 5 mm und eine im Bereich von 5 *µ*m bis 30 *µ*m, vorzugsweise 10 *µ*m liegende Feinheit aufweist.

6. Filterelement zur Benutzung bei einer Einrichtung zur Saugfiltration nach einem der Ansprüche 1 bis 5, **dadurch gekennzeichnet, dass** es ein Filtermedium (32) aufweist, das für niedrige Saugdrücke luftundurchlässig ist.

7. Filterelement nach Anspruch 6, **dadurch gekennzeichnet, dass** an einem reinseitigen, inneren Filterhohlraum (20) ein Sauganschluss (22) vorgesehen ist, der an dem Ende des Filterhohlraums (20) angeordnet ist, das vom Boden (10) eines das Filterelement (34) aufnehmenden Tanks (2) entfernt gelegen ist.
